# EUROPEAN PATENT SPECIFICATION

(11) **EP 0 606 923 B1**
(45) Date of publication and mention of the grant of the patent: **02.04.2003**
(21) Application number: 94100533.2
(22) Date of filing: 14.01.1994
(51) Int. Cl.: C08L 67/04, C08L 3/00

(54) **Method for the preparation of melt processable biodegradable compositions**
Verfahren zur Herstellung von schmelzverarbeitbaren biologisch abbaubaren Zusammensetzungen
Procédé de préparation de compositions biodégradables transformables à l'état fondu

(30) Priority: 15.01.1993 US 6013
(43) Date of publication of application: 20.07.1994
(60) Divisional application: 98114766.3
(73) Proprietor: McNEIL-PPC, INC., Milltown New Jersey 08850 (US)
(72) Inventor: Dabi, Shmuel, Highland Park, NJ 08904 (US); Kataria, Ram L., Hamilton Square, NJ 08690 (US)
(74) Representative: Groening, Hans Wilhelm, Dipl.-Ing.

(56) References cited:
- WO-A-91/02025
- WO-A-92/01733
- WO-A-92/19680
- WO-A-93/00116
- JP-A- 3 027 109
- US-A- 5 087 650

## Description

### Background of the Invention

This invention is related to the development and use of environmentally friendly materials that can alleviate the growing environmental problem of excessive trash. This invention relates to the development of compositions that degrade rapidly by microorganisms. These compositions can be used in a variety of consumer disposable products. For example, the materials can be fabricated into films, fibers and molded parts for the manufacturing of disposable products such as diapers, sanitary napkins, adult incontinence products, and particularly tampon applicators.

Many natural polymers are known to degrade rapidly by microorganisms but most of them are not useful in fabricating articles because they lack the properties typical to plastic materials. In addition, they are not melt processable. One such material is natural starch. Being cheap and readily available, starch has become the leading component in many developments of biodegradable compositions. The challenge has always been to convert this heat sensitive powder into a melt processable composition that has good mechanical properties while maintaining its high rate of biodegradation.

Many natural and synthetic materials are also known to undergo a rapid digestion by microorganisms. Their chemical structures vary from hydrocarbons and carbohydrates to molecules with ester or amide linkages. Encyclopedia of Chemical Technology, *Plastic, Environmentally Degradable, Supp. Vol*., 626-68 (Kirk-Othmer, 3d ed.). Most of these materials are not useful in fabricating articles because they lack the mechanical properties typical to plastic materials, in addition to being difficult to process.

The use of starch as a low cost biodegradable filler in certain polymeric systems is known. A fairly high concentration of starch filler is required to achieve biodegradation. At the same time, the mechanical properties of the compositions deteriorate sharply with increasing starch 'content. The first breakthrough in making high starch content materials was the discovery that starch can be melt processed in the presence of water, heat, and pressure. *See* U.S. Patent Numbers 4,133,784 and 4,337,181 ("the USDA patents").

The USDA patents describe the use of starch filled poly(ethylene-acrylic acid) (EAA) and polyethylene (PE) as a biodegradable film for packaging and agricultural mulch. These patents describe a process where the starch is first gelatinized in the presence of water at elevated temperatures. Under such conditions the highly hydrogen bonded natural structure is destroyed and melt flow is attained. The resulting mixture is then blended with EAA and PE. Large amounts of water are used (20%-50%) and the final starch content is as high as 60 wt. %, after the water is removed.

Tests have indicated that the biodegradation rate of the materials prepared according to these patents displayed unsatisfactory biodegradation properties. The injected molded parts containing PE/EAA with 40 wt. % starch did not degrade at all in the sewage system (0 to 5 % weight loss) after 30 days. This time period was selected for testing because water treatment facilities typically had sewage in residence for about 30 days, but in modern facilities the in residence time is less than a week. However, sanitary protection devices may end up in septic tanks as well so to avoid accumulation and clogging in the plumbing it is reasonable to require a maximum 30 days for degradation.

A starch based blown film is also described in an article by Felix Otey. *Ind. Eng. Chem. Res.,* **1987**, *26*, 1659-1663.

U.S. Patent Number 3,949,145 describes a method to prepare polyvinyl alcohol films filled with starch for agricultural applications. This composition is highly water sensitive, making the composition highly unsuitable for disposable products such as diapers and sanitary napkins. Also, polyvinyl alcohol-containing samples degrade very slowly under simulated anaerobic sewage treatment conditions making compositions formulated according to this patent unsuitable for disposable products.

Injection molded starch capsules are described in U.S. Patent Number 6,673,438. These capsules are made from pure starch in the presence of 5% to 30% water and heat. The structure of the strongly hydrogen bonded starch is believed to be-destroyed under these conditions, creating a melt flow. The resulting material is stiff and extremely water sensitive, which make the compositions a poor candidate for biodegradable products such as disposable diapers and sanitary napkins.

Recent improvements in producing starch based biodegradable articles have been reported. *See* U.S. Patent Number 4,673,438; U.K. Patent Number 2,190,093; and European Publications 282,451, 298,920, 304,401, 326,517, and 327,505.

U.S. Patent Number 5,095,054 discloses polymer blends that can be transformed by heat and under pressure to form products having dimensional stability. These compositions comprise destructurized starch, and at least one substantially water insoluble polymer; the composition may optionally contain another water-insoluble polymer and a plasticizer. The starch used in these compositions has a relatively high water content that significantly modifies the starch's dimensional and mechanical properties; although the destructurized starch is thermoplastic, it is not water resistant. This starch composition is an unsuitable substrate for manufacturing disposable products such as tampon applicators, disposable diapers, and sanitary napkins.

U.S. Patent Number 5,087,650 discloses biodegradable plastic compositions comprising unmodified starch and thermoplastic polymers. The starch too has a high water content that causes the starch to become destructurized when heated under pressure. This affects the starch's dimensional and mechanical properties and makes the compositions unsuitable for biodegradable thermoplastic compositions.

GB 2,190,093 describes starch compositions that consist of at least 72 wt. % starch and, optionally, a second hydrophilic polymer. The presence of at least 10 wt. % water is also essential in that process which makes the compositions unsuitable for consumer products.

PCT Application, International Publication Number WO91/02025, discloses a starch-polymer alloy comprising destructurized starch and an ethylene copolymer. Tests have indicated that compositions prepared according to this patent lacked the necessary biodegradation properties required to be suitable for consumer products.

The use of poly(3-hydroxybutyrate) (PHB) and poly (3-hydroxyvalerate) (PHV) copolymer blends are described in Dave. *et al., Polym. Mater. Sci.*, **1990,** *62,* 231-35. Degradation studies of polycaprolactone/PHBV compositions yielded relatively low weight loss under lab enzymatic hydrolysis.

A molded tampon applicator from poly(3-hydroxybutyrate) and poly(3-hydroxyvalerate), a plasticizer, and a nucleating agent is described in U.S. Patent Number 4,900,299, assigned to McNeil. Also disclosed is the optional use of a biodegradable filler as hydroxyalkyl cellulose or starch.

Another biodegradable polymer blend containing 3-hydroxybutyrate/3-hydroxyvalerate copolymer, blended with e.g. synthetic ethylene copolymer such as an ethylene vinylacetate copolymer, is described in PCT Application, International Publication Number WO 92/01733. Again the use of a biodegradable filler such as starch or cellulose and/or an environmentally acceptable filler such as calcium carbonate or talc as well as of a plasticizer is disclosed.

JP-A-3 027 109 describes the preparation of biodegradable flat yarn by extruding a polymer while adding biodegradable substance such as starch in a preferred amount of 5 to 25 %. It is disclosed to use a master batch of rice starch with a water content of 0.1 %.

The use of starch filled polymers is the cheapest and most convenient route for producing functional biodegradable materials. But the starch content in such compositions must be very high (>50 wt. %) to achieve a reasonable rate of biodegradation. Further, starch powder typically contains 10% to 40% by weight moisture. This starch is generally charged into an extruder where the combination of heat and pressure is sufficient to destructurize and melt the starch. Because starch becomes the major phase, the resulting materials are brittle and require further modifications.

Typically, a fairly high concentration of starch filler is required to achieve biodegradation. But conventional polymers such as polyethylene, polyurethane, etc. have a limited useful capacity for starch filler, that is, the mechanical properties of the compositions deteriorate sharply with increasing starch content. Further, microorganisms have been shown to selectively digest the starch without degrading the polymeric matrix.

The prior art discloses certain compositions that contain destructurized starch, which is a water soluble material and has a very limited use in consumer products. This starch is formed by exposing starch to heat and pressure in the presence of water, which breaks the hydrogen bonds between the starch molecules and renders the materials thermoplastic but soluble in cold water, and thus, unsuitable for consumer products. For this reason, other water insoluble polymers have been incorporated into such compositions, but this caused poor biodegradation.

Despite advances, there still remained a challenge to find a reasonable trade-off between water resistance and high rate of degradation. The present invention provides a method of preparing compositions that maintain a proper balance between mechanical properties, high biodegradation rate, processability, and low cost.

### Summary of the Invention

Tests indicate that compositions prepared according to the present invention are thermoplastic, exhibit good mechanical properties, and readily degrade in the presence of microorganisms. These compositions can be injection molded into thin walled parts which are capable of appreciably degrading in the sewage system in thirty days. These products find utility in flushable disposable products.

In one aspect of the invention, compositions comprising a blend of a thermoplastic and ester containing polymer, optionally a plasticizer, and an unmodified starch, are provided. These compositions are prepared as defined in claim 1.

### Detailed Description of the Invention

This invention provides for a method for preparing thermoplastic biodegradable compositions. These compositions comprise a blend of a thermoplastic and ester containing polymers, optionally a plasticizer, and an unmodified starch.

The thermoplastic polymer component in these compositions contains the monomeric unit represented by the following general Formula I: 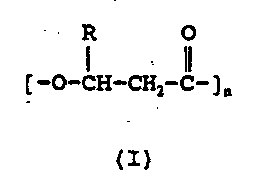 wherein R is independently alkyl having from about 1 to 9 carbon atoms (i.e., homologous hydrocarbon series from methyl to nonyl). In broader terms, all biodegradable poly(3-hydroxyalkanoates ) are suitable polymers for this invention. The thermoplastic polymers of Formula I may include copolymers where R differs in the repeating monomeric units. This family of polymers has been described. Gross, *et al*., *Macromolecules,* **1989**, *22*, 1106; Brandl,, *et al., Applied and Environmental Microbiology*, **1988**, *58*, 1977. These polymers are generally produced by microorganisms and several variants have been synthesized in laboratories. Bloembergen, *et al*., *Macromolecules,* **1987**, *20,* 3089-91; Shelton, *et al*., *Polymer Letters,* **1971,** *9,* 173-78. These polymers may be synthesized according to methods known to those skilled in the art. The aforementioned publications describe exemplary synthetic techniques.

In accordance with a preferred embodiment, the polymer (I) possesses a methyl or ethyl sidechain, R, (i.e., poly(3-hydroxybutyrate) (PHB) and poly(3-hydroxyvalerate) (PHV), respectively). In a more preferred embodiment, a copolymer of PHB and PHV will be used (PHBV), wherein the valerate content is between about 5 to 25%.

Thermoplastic polymer (I) is present in the compositions in an amount of about 10 to 70 wt. %. Preferably, the thermoplastic polymer content will be about 20 to 50 wt. %.

Thermoplastic polymers such as PHBV are stiff and brittle and are difficult to process due to their low rate of crystallization. Blending PHBV with certain ester containing polymers overcomes these drawbacks permitting the synthesis of strong and useful materials that degrade rapidly in the presence of microorganisms.

Ester containing polymers suitable for inclusion in these compositions will have ester linkages in the backbone or contain pendant ester groups. These polymers have a molecular weight greater than about 10,000.

Polymers containing ester linkages in the backbone contain one or more monomeric units of the following general Formula II: 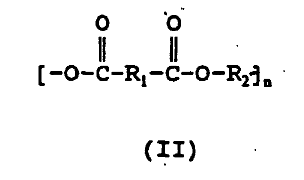 wherein R₁ may be alkylene or alkenylene having about 2 to 12 carbon atoms; and R₂ is alkylene, alkylene, or arylene having up to about 12 carbon atoms.

In a preferred embodiment, the polymers containing ester linkages in the backbone (II) may be polycaprolactone, polyethylene glycol adipate, polypropylene glycol sebacate. In a more preferred embodiment, the polymer (II) is polycaprolactone.

Polymers comprising pendant ester groups have one or more monomeric units represented by the following general Formulas III and IV: 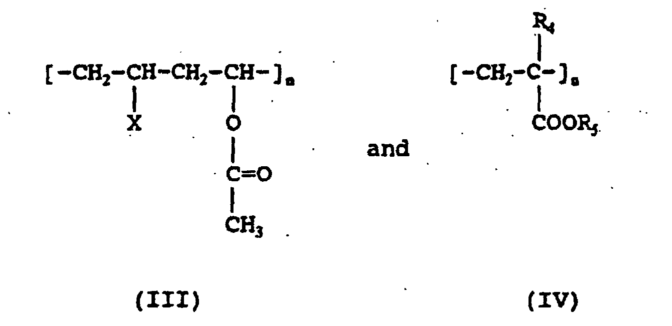 wherein X is independently H, Cl, alkyl having from about 1 to 3 carbon atoms, aryl, an acetate or hydroxyl group; R₄ is H or alkyl having from about 1 to about 2 carbon atoms; R₅ is alkyl having from about 1 to 4 carbon atoms.

In certain preferred embodiments, the polymers with pendant ester groups may be polyvinyl acetate, ethylene vinyl acetate copolymers, vinyl chloride-vinyl acetate copolymers, described in Formula III; or methacrylate copolymers, described in Formula IV.

The ester-containing polymers (II), (III), and/or (IV) are present in the composition in an amount of about 5 to 35 wt. %. In a preferred embodiment, the ester-containing polymer content will be about 10 to 25 wt. %.

Generally, the ester-containing polymers used in practicing this invention are commercially available or may be synthesized according to conventional methods known to those skilled in the art.

The compositions prepared according to the invention may also contain up to about 30 wt. % of a plasticizer, preferably about 5 to 20 wt. %. Suitable plasticizers include liquid esters of dibasic aliphatic acids having a molecular weight of less than about 4000 and having between 2 to 12 carbon atoms, or polyesters represented by Formula II above, and are predominantly liquids or wax-like materials with molecular weights of less than 2000, or the acetate esters of glycerine.

In a preferred embodiment, the plasticizer is selected from the group including triacetate ester (triacetin), poly(propane sebacate), poly(hexamethylene succinate), poly(hexamethylene fumarate), poly(dodecane sebacate), and poly(tetramethylene azelate). In a more preferred embodiment; the plasticizer is triacetate ester (triacetin). Generally, the plasticizers are commercially available or may be synthesized according to conventional methods known to those skilled in the art.

To accelerate degradation and reduce the cost of the compositions, an unmodified starch in the amount of about 20 to 40 wt. % of the composition is added to the compositions to control the compositions' melt viscosity. In the context of this invention, "unmodified starch" means starch that has not been melt processed, and, thus, its crystalline structure has not been disrupted. The starch has a water content of less than 2%, preferably no more than about- 0.1%. It is also preferred that the starch have a particle size of less than about 15 microns, and preferably less than about 5 microns.

Starches suitable for fillers include natural or vegetable starches such as those extracted from corn, maize, potatoes, rye, oats, or wheat.

The thermoplastic compositions prepared according to the method of the invention are useful for producing injection-molded, thin-walled articles which have the advantage of being biodegradable. Thus, the compositions prepared according to the method of this invention are particularly useful for preparing flushable, disposable products such as tampon applicators. Shaped articles such as films, fibers, and molded parts can be made from the compositions prepared according to the method of this invention not only by injection molding processes but also by melt-processes such as melt-extrusion, and compression molding.

### EXAMPLES

### EXAMPLE 1

### a. Preparation

PHBV (15% hydroxyvalerate), obtained from ICI, England and the ester containing polymers were melted and blended with plasticizer and fillers using a Brabender Plasti-Corder mixer. The ester-containing polymers, plasticizer, and amounts of the components are set forth in Table 2. The mixing was carried out at 160°C and 50 rpm. The uniform blends were removed from the bowl and pressed into 254-508µm (10 - 20 mil) thick films (34.5 MPa (5000 psi), 160°C) for characterization and biodegradation testing.

### Materials

G-30 - Paraplex G-30, a low molecular weight liquid aliphatic polyester (C.P. Hall).
PEG - 4000 molecular weight polyethylene glycol (Carbowax 3600 Union Carbide.
Triacetin (triacetate ester of glycerol) - technical grade (Celanese).
EVA - Ethylene-vinylacetate copolymer, 28 % acetate (UE-634, USI).
PCL - Polycaprolactone (Tone 700 Union Carbide).
PHBV - Polyhydroxybutyrate-polyhydroxyvalerate copolymer (ICI).
Starch - 5 to 10 microns powder (ADM).
CaCO₃ - Calcium carbonate.

### b. Mechanical and Dimensional Properties

The compositions prepared and studied are described in Table 2 along with test results.

In the context of this invention " tensile strength," means the maximum stress a material subjected to a stretching load can withstand without breaking. The term "elongation" refers to the fractional increasing a material's length due to stress in tension; also referred to as elasticity. The tensile strength/elongation of the compositions was determined using an Instron at 27.4 cm (10 inch)/minute with crosshead speed and a 1 inch gap. "Flex modulus" describes the polymer's stiffness. It was measured using an Instron at 5.08 cm (2 inch)/minute. The term "melt index," as used in the context of this invention, means the number of grams of thermoplastic resin that can be forced through a specified opening under a certain pressure; this is a very important property for thermoplastic compositions. The melt index was determined at 34.5 mPa (5000 psi) and at 160°C.

**Table 2**

| **Biodegradable Compositions Based On PHBV** | | | | | | |
|---|---|---|---|---|---|---|
| Sample | Tensile Strength (PSI) MPa | Elong. % | Rex Modu (Kpsi) MPa | Molt Index 160°C | % Weight loss 30 days | Composition A/B/C/D A=PHBV D=STARCH |
| | | | | | | B=PCL C =Triacetin |
| 1 | (814) 5.62 | 41 | (118) 814 | 6 | - | 46/23/10/20 |
| 2 | (504) 3.48 | 46 | (98) 676 | 7 | 79.5 | 38/17/15/30 |
| 3 | (674) 4.65 | 7 | (134) 925 | 11 | 85.3 | 27/13/20/40 |
| 4 | (489) 3.37 | 172 | (122) 842 | 9 | - | 43/22/15/20 |
| 5 | (342) 2.36 | 23 | (138) 952 | 5 | 83 | 30/15/15/40 |
| 6 | (654) 4.51 | 11 | (83) 573 | 13 | 71.8 | 40/20/20/20 |
| 7 | (504) 3.48 | 47 | (165) 1138 | 4.2 | 100 | 50/0/25/25 |
| 8 | (581) 4.01 | 18 | (222) 1532 | 2.8 | 100 | 45/0/20/35 |
| 9 | (1570) 10.83 | 15 | (331) 2284 | 39 | 100 | 70/30/0/0 |
| 10 | (849) 5.86 | 114 | (131) 904 | 12 | 51.7 | 35/35/10/20 |
| 11 | (325) 2.24 | 70 | (110) 759 | 13 | 69 | 27.5/27.5/5/15/30 |
| 12 | (400) 2.76 | 15 | (85) 586 | 20 | 76.8 | 20/20/20/40 |
| 14 | (347) 2.39 | 20 | (108) 745 | 11 | 74.1 | 22.5/22.5/15/40 |
| 15 | (452) 3.12 | 71 | (102) 704 | 28 | 69.3 | 30/30/20/20 |
| 16 | (597) 4.12 | 57 | (107) 738 | 22 | 72.2 | 25/25/20/30 |
| 17 | (514) 3.55 | 36 | (133) 918 | 9 | 64.2 | 30/30/10/30 |
| 18 | (1057) 7.29 | 9 | (185) 1276 | 7 | 71.5 | 25/25/10/40 |
| 19 | (1154) 7.96 | 115 | (150) 1035 | 21 | 24.9 | 23/47/10/20 |
| 20 | (933) 6.44 | 23 | (99) 683 | 25 | 46.1 | 17/38/15/30 |
| 21 | (341) 2.35 | 19 | (97) 669 | 30 | 68.6 | 13/27/20/40 |
| 22 | (1086) 7.49 | 126 | (99) 683 | 28 | 36.1 | 22/43/15/20 |
| 23 | (615) 4.24 | 11 | (134) 925 | 18 | 65.6 | 15/30/15/40 |
| 24 | (881) 6.08 | 65 | (128) 883 | 42 | 45.9 | 20/40/20/20 |
| 25 | (583) 4.02 | 32 | (96) 662 | 37 | 60 | 16/34/20/30 |
| 26 | (755) 5.21 | 41 | (127) 876 | 16 | 44 | 20/40/10/30 |
| 27 | (695) 4.80 | 16 | (111) 766 | 13 | 59.4 | 16/34/10/40 |
| | | | | | | B=EVA C=TRIACETIN |
| 28 | (512) 3.53 | 49 | (64) 442 | 5 | 75 | 46/23/10/20 |
| 29 | (386) 2.66 | 78 | (66) 455 | 4.6 | 100 | 38/17/15/30 |
| 30 | (304) 2.10 | 12 | (51) 352 | 10 | 87 | 27/13/20/40 |
| 41 | (270) 1.86 | 270 | (12.5) 86.2 | 9.9 | 26 | 23/46/10/20 |
| 42 | (158) 1.09 | 277 | (14.7) 101.4 | 19.1 | 60 | 16/34/10/40 |
| 43 | | | | | 70 | 13/27/20/40 |
| | | | | | | B=TONE 700 C=G-30 |
| 44 | (1077) 7.43 | 83 | (218) 1504 | 7 | 58.8 | 46/23/10/20 |
| 45 | (926) 6.39 | 13 | (182) 1256 | 8 | 65(70) | 38/17/15/30 |
| 46 | (596) 4.11 | 8 | (156) 1076 | 16 | 67.6 | 27/13/20/40 |
| 47 | (736) 5.08 | 7 | (138) 952 | 7 | 73.4 | 30/15/15/40 |
| 48 | (1022) 7.05 | 38 | (150) 1035 | 15 | 63.9 | 40/20/20/20 |
| | | | | | | B=EVA C=PEG |
| 49 | (506) 3.49 | 18 | (95.6) 659.6 | 3.4 | 75 | 46/23/10/20 |
| 50 | (682) 4.70 | 2.7 | (153) 1056 | 4.2 | 100 | 38/17/15/30 |
| | | | | | | B=EVA C = Triacetin D=CaCo₃ |
| 51 | (1096) 7.56 | | (111.4) 768.7 | 12.4 | 100 | 50/10/20/20 |
| 52 | (837) 5.78 | | (66.7) 460.2 | 8 | 100 | 40/10/25/25 |
| 53 | (882) 6.09 | | (74.5) 5.14 | 9 | 85 | 40/20/20/20 |

As can be seen in Table 2, a fairly wide range of mechanical and processing properties can be obtained from the ranges discussed in the preferred embodiments.

The type and concentration of the plasticizer (C) has a great impact on the melt flow index of the blend (i.e., processability) and on the flexibility and degradation rate. See Table 2.

In certain preferred embodiments, the ratio of the PHBV to the ester containing polymer (i.e., PCL, EVA) may range from 2:1 to 1:2. The rate of degradation is dependent on this ratio and the PHBV rich compositions degrade faster. For rapid degradation, the ester containing polymer should preferably not be present in levels greater than about 20 wt. % where the PHBV content is less than about 50 wt. %. For example, compare the percent weight loss of samples 2, 3, 5, and 6 with samples 19, 20, 22, 24, 26, and 41 as reported in Table 2.

### c. Biodegradation tests

The biodegradation of the compositions described in Table 2 was tested in simulated water treatment plant conditions. The samples were exposed to municipal sludge microflora kept at 35°C. These conditions provide a representative anaerobic environment for the degradation of flushed disposable materials. The degradation was followed by monitoring gas evolution and weight loss for thirty days.

### EXAMPLE 2

### Preparation of Articles from the Biodegradable Compositions

The following composition was first compounded in a 30 mm corotating Werner & Pfleiderer twin screw extruder:

| | % weight |
|---|---|
| PHBV (7% valerate) | 38 |
| Tone 700 | 16 |
| Triacetin | 15 |
| Starch | 20 |
| Calcium carbonate | 10 |
| Boron Nitride | 1 |

### Materials

Triacetin (triacetate ester of glycerol) - technical grade (Celanese).
PHBV - Polyhydroxybutyrate-polyhydroxyvalerate copolymer-(ICI).
Starch - 5 to 10 microns powder (ADM).
CaCO₃ - Calcium carbonate.
Tone 700 - Polycaprolactone (PCL) (Union Carbide).

The PHBV powder was preblended with the polycaprolactone (Tone 700) pellets and the starch powder. In a cement mixture the solid blend was sprayed with the liquid triacetin and tumbled for 15 minutes to obtain a uniform mixture. The blend was then fed into the back of the twin screw extruder using a volumetric feeder. Screw speed of 300 rpm was used and the temperature profile was gradually increased from 91°C at the back to 135°C at the front. The actual melt temperature was 140°C. The strands were cooled and chopped into 5mm size pellets.

Tampon applicators were molded from the above pellets using an 80 ton Engle machine with 5.2 oz. barrel capacity. The molding cycle time was 14 seconds and the mold temperature was 33°C. The temperature profile in the barrel was from 141°C in the feed zone up to 160°C at the nozzle.

## Claims

1. A method of preparing a composition of matter, the method comprising blending of
a. 10 to 70 wt.% of one or more thermoplastic polymers or copolymers comprising more than one repeating unit of the general formula: 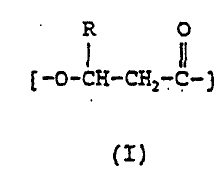 wherein R is independently alkyl having from about 1 to 9 carbon atoms;
b. 5 to 35 wt.% of one or more ester containing polymers, the one or more ester containing polymers having a molecular weight greater than 10,000 and selected from the group consisting of:
i. polymers with ester linkages in the backbone, the polymers comprising one or more monomeric units of the formula: 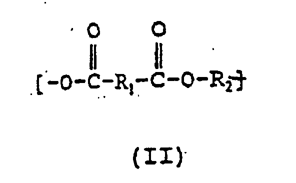 wherein R₁ may be alkylene or alkenylene having about 2 to 12 carbon atoms; and R₂ is alkylene alkenylene or arylene having up to about 12 carbon atoms;
ii. polymers with pendant ester groups, the polymers comprising one or more monomeric units selected from the group consisting of the units: 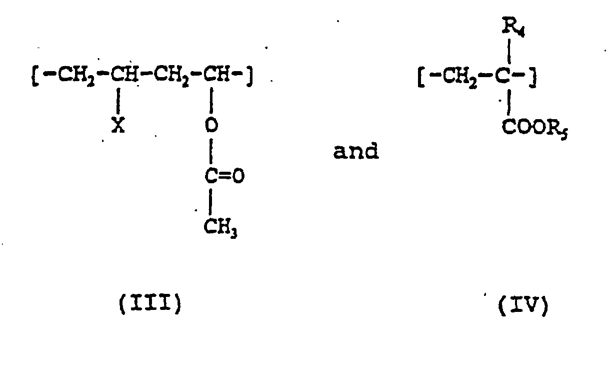 wherein X is independently H, Cl, alkyl having about 1 to 3 carbon atoms, aryl, acetate or hydroxyl group; R₄ is H or alkyl having from 1 to 2 carbon atoms; R₅ is alkyl having from about 1 to 4 carbon atoms; and
iii. polycaprolactone;
c. 0 to 30 wt.% of one or more plasticizers; and
d. 20 to 40 wt.% of an unmodified starch having a water content of less than 2 wt.%, which means that the starch has not been melt processed and its crystalline structure has not been disrupted.

2. The method of claim 1 wherein the plasticizer is selected from the group consisting of liquid esters of dibasic aliphatic acids having a molecular weight of less than 4000 and having between 2 to 12 carbon atoms; polyesters; and acetate esters of glycerine.

3. The method of anyone of claims 1 and 2 wherein the thermoplastic polymer is selected from the group consisting of poly(3-hydroxybutyrate) and poly(3-hydroxyvalerate).

4. The method of anyone of claims 1 and 2 wherein the thermoplastic polymer is a copolymer of poly(3-hydroxybutyrate) and poly(3-hydroxyvalerate) where the valerate content is between 5 - 25 %.

5. The method of anyone of claims 1 to 4 wherein the ester containing polymer is selected from the group consisting of polycaprolactone, polyethylene glycol adipate, polypropylene glycol sebacate, polyvinyl acetate, ethylene-vinyl acetate copolymers, vinyl chloride-vinyl acetate copolymers, and methacrylate copolymers.

6. The method of anyone of claims 1 to 5, wherein said starch, as the inert filler, has a particle size between 5 and 15 microns.

7. The method of anyone of claims 1 to 5, wherein said starch, as the inert filler, has a particle size less than 5 microns.

8. The method of anyone of claims 1 to 7 wherein the plasticizer is selected from the group consisting of poly(ethylene adipate), poly(propane sebacate), poly(hexamethylene succinate), poly(hexamethylene fumarate), poly(dodecane sebacate), poly(tetramethylene azelate), or triacetate ester.

9. The method of anyone of claims 1 to 8 wherein the thermoplastic polymer is present in an amount of 20 to 50 wt%.

10. The method of anyone of claims 1 to 9, wherein the ester containing polymer is present in an amount of 10 to 25 wt. %.

11. The method of anyone of claims 1 to 10 wherein the plasticizer is present in an amount of 5 to 20 wt.%.

12. The method of claim 1 wherein the thermoplastic polymer is selected from the group consisting of poly(3-hydroxybutyrate) and poly(3-hydroxyvalerate) and the ester containing polymer is selected from the group consisting of polycaprolactone, polyethylene glycol adipate, polypropylene glycol sebacate, polyvinyl acetate, ethylene-vinyl acetate copolymers, vinyl chloride-vinyl acetate copolymers, or methyacrylate copolymers.

13. The method of claim 1 wherein the thermoplastic polymer is selected from the group consisting of poly(3-hydroxybutyrate) and poly(3-hydroxyvalerate) and copolymers thereof, and the plasticizer is selected from the group consisting of poly(ethylene adipate), poly(propane sebacate), poly(hexamethylene succinate), poly(hexamethylene fumarate), poly(dodecane sebacate), poly(tetramethylene azelate), and triacetate.

14. The method of claim 1 wherein the thermoplastic polymer is selected from the group consisting of poly(3-hydroxybutyrate) and poly(3-hydroxyvalerate) and copolymers thereof; the plasticizer is selected from the group consisting of poly(ethylene adipate), poly(propane sebacate), poly(hexamethylene succinate), poly(hexamethylene fumarate), poly(dodecane sebacate), poly(tetramethylene azelate), and triacetate ester; and the ester containing polymer is selected from the group consisting of polycaprolactone, polyethylene glycol adipate, polypropylene glycol sebacate, polyvinyl acetate, ethylene-vinyl acetate copolymers, vinyl chloride-vinyl acetate copolymers, and methacrylate copolymers.

15. The method of claim 14 wherein the thermoplastic polymer is present in an amount 20 to 50 wt.%, the ester-containing polymer is present in an amount of 10 to 25 wt.%, the plasticizer is present in an amount of 5 to 20 wt.%, and the starch is present in an amount of 20 to 40 wt.%.

16. A method of preparing a biodegradable composition according to claim 1 comprising:
a. blending 10 to 70 wt.% of one or more thermoplastic polymers selected from the group consisting of poly(3-hydroxybutyrate) and poly(3-hydroxyvalerate) and copolymers thereof; with an amount of 0 to 30 wt.% of plasticizer selected from the group consisting of poly(ethylene adipate), poly(propane sebacate), poly(hexamethylene succinate), poly(hexamethylene fumarate), poly(dodecane sebacate), poly(tetramethylene azelate), and triacetate ester;
b. blending the product of step (a) with an ester-containing polymer selected from the group consisting of polycaprolactone, polyethylene glycol adipate, polypropylene glycol sebacate, polyvinyl acetate, ethylene-vinyl acetate copolymers, vinyl chloride-vinyl acetate copolymers, and methacrylate copolymers;
c. blending the product of step (b) with an amount of 20 to 40 wt.% of unmodified starch having a water content of less than 2 wt.% and a particle size of less than 15 microns.

## Patentansprüche

1. Verfahren zur Herstellung einer Zusammensetzung, wobei das Verfahren das Mischen umfaßt von:
a. 10 bis 70 Gew.% von einem oder mehreren thermoplastischen Polymeren oder Copolymeren, umfassend mehr als eine sich wiederholende Einheit der allgemeinen Formel: 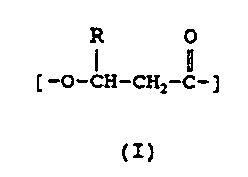 wobei R unabhängig Alkyl mit ungefähr 1 bis 9 Kohlenstoffatomen ist;
b. 5 bis 35 Gew.% von einem oder mehreren Ester-enthaltenden Polymeren, wobei der eine oder die mehreren Ester-enthaltenden Polymere ein Molekulargewicht größer als 10.000 haben und ausgewählt sind aus der Gruppe, bestehend aus:
i. Polymeren mit Esterverbindungen in der Hauptkette, wobei die Polymere eine oder mehrere monomere Einheiten der Formel umfassen: 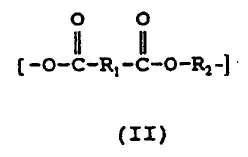 wobei R₁ Alkylen oder Alkenylen mit ungefähr 2 bis 12 Kohlenstoffatomen sein kann, und R₂ Alkylen, Alkenylen oder Arylen ist mit bis zu ungefähr 12 Kohlenstoffatomen;
ii. Polymeren mit Ester-Seitengruppen, wobei die Polymere eine oder mehrere monomeren Einheiten umfassen, ausgewählt aus der Gruppe, bestehend aus den Einheiten: 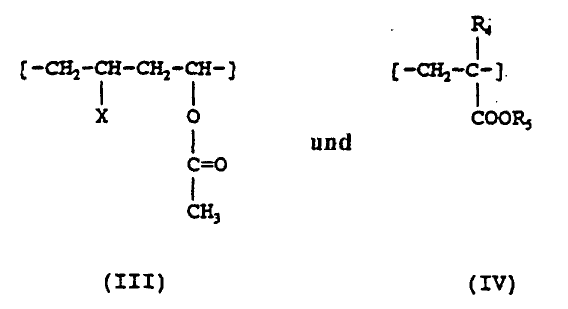 wobei X unabhängig H, Cl, Alkyl mit 1 bis 3 Kohlenstoffatomen, Aryl, Acetat oder eine Hydroxylgruppe ist; R₄ H oder Alkyl mit 1 bis 2 Kohlenstoffatomen ist; R₅ ein Alkyl mit ungefähr 1 bis 4 Kohlenstoffatomen ist; und
iii. Polycaprolacton;
c. 0 bis 30 Gew.% von einem oder mehreren Weichmachern; und
d. 20 bis 40 Gew.% einer nicht-modifizierten Stärke, die einen Wassergehalt von weniger als 2 Gew.% hat, was bedeutet, daß die Stärke nicht schmelzverarbeitet worden ist und ihre kristalline Struktur nicht zerstört worden ist.

2. Verfahren nach Anspruch 1, wobei der Weichmacher ausgewählt ist aus der Gruppe, bestehend aus flüssigen Estern aus zweibasigen aliphatischen Säuren mit einem Molekulargewicht von weniger als 4.000 und mit zwischen 2 bis 12 Kohlenstoffatomen, Polyestern und Acetatestern von Glyzerin.

3. Verfahren nach einem der Ansprüche 1 und 2, wobei das thermoplastische Polymer ausgewählt ist aus der Gruppe, bestehend aus Poly(3-hydroxybutyrat) und Poly(3-hydroxyvalerat).

4. Verfahren nach einem der Ansprüche 1 und 2, wobei das thermoplastische Polymer ein Copolymer aus Poly(3-hydroxybutyrat) und Poly(3-hydroxyvalerat) ist, wobei der Valeratgehalt zwischen 5-25% liegt.

5. Verfahren nach einem der Ansprüche 1 bis 4, wobei das Ester-enthaltende Polymer ausgewählt ist aus der Gruppe, bestehend aus Polycaprolacton, Polyethylenglycoladipat, Polypropylenglycolsebacat, Polyvinylacetat, Ethylen-vinylacetat-Copolymeren, Vinylchlorid-vinylacetat-Copolymeren und Methacrylat-Copolymeren.

6. Verfahren nach einem der Ansprüche 1 bis 5, wobei die Stärke als der inerte Füllstoff eine Partikelgröße zwischen 5 und 15 Mikron hat.

7. Verfahren nach einem der Ansprüche 1 bis 5, wobei die Stärke als der inerte Füllstoff eine Partikelgröße von weniger als 5 Mikron hat.

8. Verfahren nach einem der Ansprüche 1 bis 7, wobei der Weichmacher ausgewählt ist aus der Gruppe, bestehend aus Poly(ethylenadipat), Poly(propansebacat), Poly(hexamethylensuccinat), Poly(hexamethylenfumarat), Poly(dodecansebacat), Poly(tetramethylenazelat) oder Triacetatester.

9. Verfahren nach einem der Ansprüche 1 bis 8, wobei das themoplastische Polymer in einer Menge von 20 bis 50 Gew.% vorliegt.

10. Verfahren nach einem der Ansprüche 1 bis 9, wobei das Ester-enthaltende Polymer in einer Menge von 10 bis 25 Gew.% vorliegt.

11. Verfahren nach einem der Ansprüche 1 bis 10, wobei der Weichmacher in einer Menge von 5 bis 20 Gew.% vorliegt.

12. Verfahren nach Anspruch 1, wobei das thermoplastische Polymer ausgewählt ist aus der Gruppe, bestehend aus Poly(3-hydroxybutyrat) und Poly(3-hydroxyvalerat), und das Ester-enthaltende Polymer ausgewählt ist aus der Gruppe, bestehend aus Polycaprolacton, Polyethylenglycoladipat, Polypropylenglycolsebacat, Polyvinylacetat, Ethylen-vinylacetat-Copolymeren, Vinylchlorid-vinylacetat-Copolymeren oder Methacrylat-Copolymeren.

13. Verfahren nach Anspruch 1, wobei das thermoplastische Polymer ausgewählt ist aus der Gruppe, bestehend aus Poly(3-hydroxybutyrat) und Poly(3-hydroxyvalerat) und Copolymeren davon, und der Weichmacher ausgewählt ist aus der Gruppe, bestehend aus Poly(ethylenadipat), Poly(propansebacat), Poly(hexamethylensuccinat), Poly(hexamethylenfumarat), Poly(dodecansebacat), Poly(tetramethylenazelat) und Triacetat.

14. Verfahren nach Anspruch 1, wobei das thermoplastische Polymer ausgewählt ist aus der Gruppe, bestehend aus Poly(3-hydroxybutyrat) und Poly(3-hydroxyvalerat) und Copolymeren davon, der Weichmacher ausgewählt ist aus der Gruppe, bestehend aus Poly(ethylenadipat), Poly(propansebacat), Poly(hexamethylensuccinat), Poly(hexamethylenfumarat), Poly(dodecansebacat), Poly(tetramethylenazelat) und Triacetatester, und das Ester-enthaltende Polymer ausgewählt ist aus der Gruppe, bestehend aus Polycaprolacton, Polyethylenglycoladipat, Polypropylenglycolsebacat, Polyvinylacetat, Ethylen-vinylacetat-Copolymeren, Vinylchlorid-vinylacetat-Copolymeren und Methacrylat-Copolymeren.

15. Verfahren nach Anspruch 14, wobei das thermoplastische Polymer in einer Menge von 20 bis 50 Gew.% vorliegt, das Ester-enthaltende Polymer in einer Menge von 10 bis 25 Gew.% vorliegt, der Weichmacher in einer Menge von 5 bis 20 Gew.% vorliegt und die Stärke in einer Menge von 20 bis 40 Gew.% vorliegt.

16. Verfahren zum Herstellen einer biologisch abbaubaren Zusammensetzung nach Anspruch 1, umfassend:
a. Mischen von 10 bis 70 Gew.% von einem oder mehreren thermoplastischen Polymeren, ausgewählt aus der Gruppe, bestehend aus Poly(3-hydroxybutyrat) und Poly(3-hydroxyvalerat) und Copolymeren davon, mit einer Menge von 0 bis 30 Gew.% eines Weichmachers, ausgewählt aus der Gruppe, bestehend aus Poly(ethylenadipat), Poly(propansebacat), Poly(hexamethylensuccinat), Poly(hexamethylenfumarat), Poly(dodecansebacat), Poly(tetramethylenazelat) und Triacetatester,
b. Mischen des Produkts aus Schritt (a) mit einem Ester-enthaltenden Polymer, ausgewählt aus der Gruppe, bestehend aus Polycaprolacton, Polyethylenglycoladipat, Polypropylenglycolsebacat, Polyvinylacetat, Ethylen-vinylacetat-Copolymeren, Vinylchlorid-vinylacetat-Copolymeren und Methacrylat-Copolymeren;
c. Mischen des Produkts aus Schritt mit einer Menge von 20 bis 40 Gew.% an nicht-modifizierter Stärke mit einem Wassergehalt von weniger als 2 Gew.% und einer Partikelgröße von weniger als 15 Mikron.

## Revendications

1. Procédé pour préparer une composition, le procédé comprenant le mélange de :
a. 10 à 70% en poids d'un ou plusieurs polymères ou copolymères thermoplastiques comprenant plus d'un motif récurrent de formule générale ; 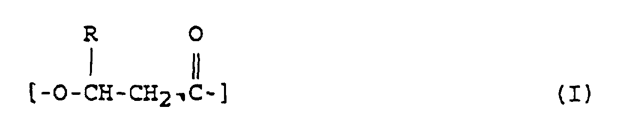 dans laquelle R est, indépendamment, un groupe alkyle ayant environ 1 à 9 atomes de carbone ;
b. 5 à 35% en poids de polymères contenant un ou plusieurs esters, les polymères contenant un ou plusieurs esters ayant une masse moléculaire supérieure à 10 000 et choisis dans le groupe formé par :
i. les polymères avec des liaisons esters dans le squelette, les polymères comprenant un ou plusieurs motifs monomères de formule : 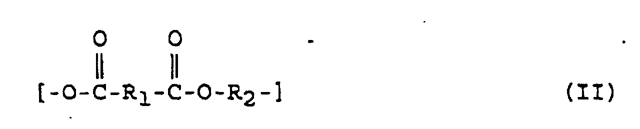 dans laquelle R₁ peut être un alkylène ou un alcénylène ayant environ 2 à 12 atomes de carbone ; et R₂ est un alkylène, alcénylène ou arylène ayant jusqu'à environ 12 atomes de carbone ;
ii. les polymères avec des groupes esters pendants, les polymères comprenant un ou plusieurs motifs monomères choisis dans le groupe formé par les motifs : 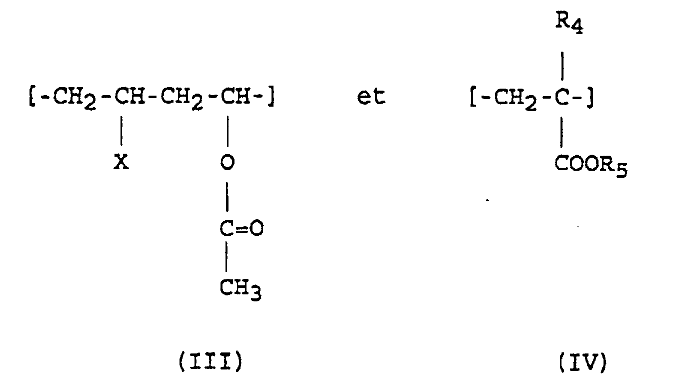 dans lesquels X est, indépendamment, H, Cl, un groupe alkyle ayant environ 1 à 3 atomes de carbone, un groupe aryle, acétate ou hydroxyle ; R₄ est H ou un groupe alkyle ayant de 1 à 2 atomes de carbone ; R₅ est un groupe alkyle ayant d'environ 1 à 4 atomes de carbone ; et
iii. une polycaprolactone ;
c. 0 à 30% en poids d'un ou plusieurs plastifiants ; et
d. 20 à 40% en poids d'un amidon non modifié ayant une teneur en eau inférieure à 2% en poids, ce qui signifie que l'amidon n'a pas encore été traité à l'état fondu et que sa structure cristalline n'a pas été rompue.

2. Procédé selon la revendication 1, dans lequel le plastifiant est choisi dans le groupe formé par les esters liquides des diacides aliphatiques ayant une masse moléculaire inférieure à 4 000 et ayant entre 2 et 12 atomes de carbone ; les polyesters ; et les esters acétates de glycérine.

3. Procédé selon l'une quelconque des revendications 1 et 2, dans lequel le polymère thermoplastique est choisi dans le groupe formé par le poly(3-hydroxybutyrate) et le poly(3-hydroxyvalérate).

4. Procédé selon l'une quelconque des revendications 1 et 2, dans lequel le polymère thermoplastique est un copolymère de poly(3-hydroxybutyrate) et de poly(3-hydroxyvalérate) où la teneur en valérate est. comprise entre 5 et 25%.

5. Procédé selon l'une quelconque des revendications 1 à 4, dans lequel le polymère contenant un ester est choisi dans le groupe formé par la polycaprolactone, le poly(adipate d'éthylèneglycol), le poly(sébacate de propylèneglycol), le poly(acétate de vinyle), les copolymères éthylène/acétate de vinyle, les copolymères chlorure de vinyle/acétate de vinyle et les copolymères méthacrylate.

6. Procédé selon l'une quelconque des revendications 1 à 5, dans lequel ledit amidon, en tant que charge inerte. possède une granulométrie comprise entre 5 et 15 micromètres.

7. Procédé selon l'une quelconque des revendications 1 à 5, dans lequel ledit amidon, en tant que charge inerte, présente une granulométrie inférieure à 5 micromètres.

8. Procédé selon l'une quelconque des revendications 1 à 7, dans lequel le plastifiant est choisi dans le groupe formé par le poly(adipate d'éthylène), le poly(sébacate de propane), le poly(succinate d'hexaméthylène), le poly(fumarate d'hexaméthylène), le poly(sébacate de dodécane), le poly(azélate de tétraméthylène) ou l'ester triacétate.

9. Procédé selon l'une quelconque des revendications 1 à 8, dans lequel le polymère thermoplastique est présent à raison de 20 à 50% en poids.

10. Procédé selon l'une quelconque des revendications 1 à 9, dans lequel le polymère contenant un ester est présent à raison de 10 à 25% en poids.

11. Procédé selon l'une quelconque des revendications 1 à 10, dans lequel le plastifiant est présent à raison de 5 à 20% en poids.

12. Procédé selon la revendication 1, dans lequel le polymère thermoplastique est choisi dans le groupe formé par le poly(3-hydroxybutyrate) et le poly(3-hydroxyvalérate) et le polymère contenant un ester est choisi dans le groupe formé par la polycaprolactone, le poly(adipate d'éthylèneglycol), le poly(sébacate de propylèneglycol), le poly(acétate de vinyle), les copolymères éthylène/acétate de vinyle, les copolymères chlorure de vinyle/acétate de vinyle ou les copolymères méthacrylate.

13. Procédé selon la revendication 1, dans lequel le polymère thermoplastique est choisi dans le groupe formé par le poly(3-hydroxybutyrate) et le poly(3-hydroxyvalérate) et leurs copolymères, et le plastifiant est choisi dans le groupe formé par le poly(adipate d'éthylène), le poly(sébacate de propane), le poly(succinate d'hexaméthylène), le poly(fumarate d'hexaméthylène), le poly(sébacate de dodécane), le poly(azélate de tétraméthylène) et le triacétate.

14. Procédé selon la revendication 1, dans lequel le polymère thermoplastique est choisi dans le groupe formé par le poly(3-hydroxybutyrate) et le poly(3-hydroxyvalérate) et leurs copolymères ; le plastifiant est choisi dans le groupe formé par le poly(adipate d'éthylène), le poly(sébacate de propane), le poly(succinate d'hexaméthylène), le poly(fumarate d'hexaméthylène), le poly(sébacate de dodécane), le poly(azélate de tétraméthylène) et l'ester triacétate ; et le polymère contenant un ester est choisi dans le groupe formé la polycaprolactone, le poly(adipate d'éthylèneglycol), le poly(sébacate de propylèneglycol), le poly(acétate de vinyle), les copolymères éthylène/acétate de vinyle, les copolymères chlorure de vinyle/acétate de vinyle et les copolymères méthacrylate.

15. Procédé selon la revendication 14, dans lequel le polymère thermoplastique est présent à raison de 20 à 50% en poids, le polymère contenant un ester est présent à raison de 10 à 25% en poids, le plastifiant est présent à raison de 5 à 20% en poids, et l'amidon est présent à raison de 20 à 40% en poids.

16. Procédé pour préparer une composition biodégradable selon la revendication 1, comprenant :
a. le mélange de 10 à 70% en poids d'un ou plusieurs polymères thermoplastiques choisis dans le groupe formé par le poly(3-hydroxybutyrate) et le poly(3-hydroxyvalérate) et leurs copolymères ; avec une quantité de 0 à 30% en poids d'un plastifiant choisi dans le groupe formé par le poly(adipate d'éthylène), le poly(sébacate de propane), le poly(succinate d'hexaméthylène), le poly-(fumarate d'hexaméthylène), le poly(sébacate de dodécane), le poly(azélate de tétraméthylène) et l'ester triacétate ;
b. le mélange du produit de l'étape (a) avec un polymère contenant un ester choisi dans le groupe formé par la polycaprolactone, le poly(adipate d'éthylèneglycol), le poly(sébacate de propylèneglycol), le poly(acétate de vinyle), les copolymères éthylène/acétate de vinyle, les copolymères chlorure de vinyle/acétate de vinyle et les copolymères méthacrylate ;
c. le mélange du produit de l'étape (b) avec une quantité de 20 à 40% en poids d'un amidon non modifié ayant une teneur en eau inférieure à 2% en poids et une granulométrie inférieure à 15 micromètres.
